# EUROPÄISCHE PATENTSCHRIFT

(11) **EP 1 323 117 B1**
(45) Veröffentlichungstag und Bekanntmachung des Hinweises auf die Patenterteilung: **13.06.2007**
(21) Anmeldenummer: 01965054.8
(22) Anmeldetag: 03.07.2001
(51) Int. Cl.: G06K 7/00, G06K 7/10

(54) **KOMMUNIKATIONSENDGERÄT**
COMMUNICATION TERMINAL
TERMINAL DE COMMUNICATION

(30) Priorität: 31.08.2000 DE 10042875
(43) Veröffentlichungstag der Anmeldung: 02.07.2003
(73) Patentinhaber: SkiData AG, 5083 Gartenau (AT)
(72) Erfinder: GRABNER, Wolfgang, 83395 Freilassing (DE)
(74) Vertreter: Berngruber, Otto
(86) Internationale Anmeldenummer: PCT/EP2001/007579
(87) Internationale Veröffentlichungsnummer: WO 2002/019250

(56) Entgegenhaltungen:
- WO-A-99/63496
- DE-C- 10 002 311
- US-A- 5 726 630
- PATENT ABSTRACTS OF JAPAN vol. 011, no. 119 (E-499), 14. April 1987 (1987-04-14) & JP 61 265905 A (TOYO COMMUN EQUIP CO LTD), 25. November 1986 (1986-11-25)

## Beschreibung

Die Erfindung betrifft ein Endgerät zur Datenkommunikation mit berührungslos arbeitenden Datenträgern, mit einer Sende-/ Empfangselektronik zur Ausstrahlung von zwei radiofrequenten Feldern mit unterschiedlicher Trägerfrequenz gemäß dem Oberbegriff des Patentanspruchs 1.

Ein solches Endgerät ist aus JP 61 265 905 A bekannt. Hierbei sind die Datenträger nach dem Transponderprinzip ausgebildet, derart, dass nach der Aktivierung durch das elektromagnetische Feld des Endgerätes die im Datenträger gespeicherten Daten ausgelesen und - falls erforderlich - auch verändert werden.

Derartige berührungslos arbeitende Datenträger werden in unterschiedlichen Bereichen eingesetzt. Als Beispiel seien hier öffentliche Transpprtsysteme, elektronische Geldbörsen, sowie Zugangsberechtigungsausweise genannt. Heutzutage existieren zwei Transdpöndergruppen: niederfrequente und hochfrequente, die je nach Anwendung eingesetzt werden.

Gemäß neuerer Bestimmungen, welche die zulässige Frequenzbandbreite sowie die vom Endgerät abgestrahlte Sendeenergie festlegen, ist nunmehr eine Trägerfrequenz von 13,56MHz vorgeschrieben. Es existieren aber zahlreiche Anlagen, die mit einer anderen niedrigeren Trägerfrequenz arbeiten. Dies ist insbesondere der Fall für Zugangsberechtigungsanlagen zu Skiliftanlagen, die zum Beispiel in Armbanduhren integriert sind und eine Trägerfrequenz von z.B. 122, 8 kHz verwenden. Diese Geräte kommunizieren mit dem Zutrittsterminal über diese Trägerfrequenz, um das Freischalten einer Sperrvorrichtung zu veranlassen.

Es besteht hier deshalb die Notwendigkeit, die Endgeräte so auszubilden, dass sie mit Datenträgern kommunizieren können, die sowohl mit einer hohen Trägerfrequenz, wie z.B. mit 13,56MHz als auch mit einer niedrigen Trägerfrequenz, wie z.B. mit 122,8 kHz arbeiten.

In diesem Zusammenhang wurde vorgeschlagen, jedes Endgerät mit zwei Schwingkreisen zu versehen, und zwar mit einem Schwingkreis mit einer kleinen Antenne für die niedrige Trägerfrequenz und einem Schwingkreis mit einer großen Antenne für die hohe Trägerfrequenz (DE 198 317 67). Diese Konstruktion weist jedoch den Nachteil auf, dass die Herstellungskosten signifikant steigen. Des weiteren wird für das Endgerät viel mehr Platz benötigt, was häufig nicht erwünscht ist. Zudem hat man festgestellt, dass sich die zwei Antennen gegenseitig beeinflussen können.

In der Patentanmeldung DE 9445587 der Anmelderin ist vorgeschlagen worden, zur Lösung dieses Problems für beide benötigten Schwingkreise, also sowohl für den hochfrequenten als auch für den niederfrequenten Schwingkreis des Endgerätes eine einzige, gemeinsame Antenne zu verwenden. Hierbei handelt es sich eine Mehrwindungsantenne, welche aber für die hohe Frequenz von 13,56MHz aufgrund der zu hohen Induktivität noch nicht ganz zufriedenstellend ist.

Der vorliegenden Erfindung liegt daher die Aufgabe zugrunde, ein Kommunikationsendgerät zu schaffen, welches sowohl bei der hohen als auch bei der geringen Trägerfrequenz kommunizieren kann und dabei die bereits erwähnten Probleme des Standes der Technik vermeidet. Diese Aufgabe wird durch die Merkmale des Patentanspruchs 1 gelöst. Weitere Ausgestaltungen und Varianten der Erfindung gehen aus den Unteransprüchen hervor.

Demnach wird vorgeschlagen, für beide benötigten Schwingkreise im Zeitmültiplex eine einzige gemeinsame Antenne mit einer Windung zu verwenden. Hierbei ist die Antenne als Koaxialkabel mit möglichst großem Innenleiterquerschnitt ausgebildet, und zwar von 1 bis 5 mm, bevorzugt von ca. 2 bis 3 mm. Durch den großen Innenleiterquerschnitt wird die zur Erzielung größerer Reichweiten nötige Güte bei der niedrigen Frequenz von beispielsweise 122,8kHz gewährleistet. Des weiteren ist der Antennenschirm etwa im mittleren Bereich unterbrochen, so dass Auswirkungen unsymmetrischer Störströme, die durch die Unsymmetrie der Antenne fließen, verhindert werden. Im Rahmen einer bevorzugten Ausführungsform ist eine Hilfsspule vorgesehen, die die Kombination der beiden Arbeitsfrequenzen ermöglichen soll. Gemäß einer weiteren Ausführungsform wird die Hilfsspule durch einen Schalter ersetzt.

Das erfindungsgemäße Endgerät kann also mit zwei Arten von Datenträgern kommunizieren, nämlich solchen, die mit einer hohen Trägerfrequenz, z.B. 13,56 MHz, und solchen, die mit einer niedrigen Trägerfrequenz, z.B. 122,8 kHz arbeiten, wobei das Endgerät vorzugsweise gleichzeitig nur mit einem Datenträger mit einer dieser beiden Trägerfrequenzen kommuniziert.

Im folgenden wird die Erfindung anhand der Zeichnung näher erläutert. In dieser stellen dar:
- Fig. 1: ein Übersichtsschaltbild des Kommunikationsendgerätes gemäß einer ersten Variante der Erfindung für die Frequenzen von 13,56 MHz und 122,8 kHz und
- Fig. 2: ein Übersichtsschaltbild einer weiteren Variante des erfindungsgemäßen Kommunikationsendgerätes, wobei die Hilfsinduktivität durch einen Schalter ersetzt worden ist.

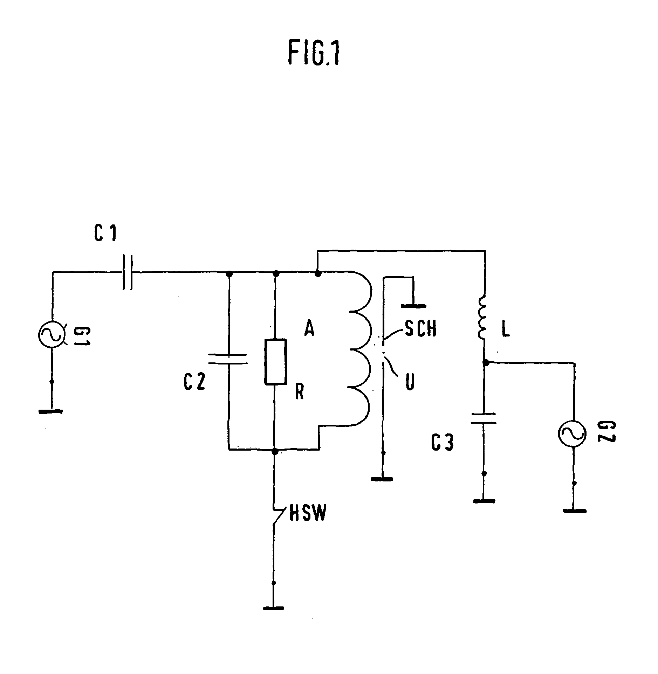

Gemäß Figur 1 besteht die erfindungsgemäße Schaltung aus dem hochfrequenten Leser G1, dem niederfrequenten Leser G2, einem Koppelkondensator C1 für 13,56MHz, einem Resonanzkondensator C2 für die hohe Frequenz von z.B. 13,56MHz, einem Resonanzkondensator C3 für die niedrige Trägerfrequenz von beispielsweise 122,8kHz, einer Hilfsinduktivität L, einem Dämpfungswiderstand R, einem Hilfsschalter HSW, einen Antennenschirm SCH sowie der Koaxialantenne A. Der Antennenschirm SCH ist im mittleren Bereich mit einer Öffnung oder Unterbrechung U versehen.

Die Hilfsspule L erscheint für 122,8kHz in Serie zur Antenne geschaltet zu sein, im Gegensatz zu der Frequenz von 13,56MHz, wo die Hilfsspule L und die Antenneninduktivität A parallel geschaltet sind. Der Leiterquerschnitt der Hilfsspule beträgt ca. 2 mm, um dadurch eine möglichst hohe Güte für den 122,8kHz Schwingkreis zu gewährleisten. Die Funktionsweise der Hilfsspule bei der 13,56MHz-Frequenz liegt darin, dass sie verhindert, dass der wechselspannungsmäßige Kurzschluß des Resonanzkondensators C3 die Antenne kurzschließt. Das bedeutet, dass sich der bei 13,56MHz auftretende Hochfrequenzstrom gleichmäßig auf die Antenneninduktivität und die Hilfsinduktivität L aufteilt. Dieses Prinzip hat die Halbierung der für die Kommunikation nötigen Energie des Magnetfeldes der Antenne zur Folge, wobei die übrig gebliebene Energie für das einwandfreie Funktionieren des Kommunikationsendgerätes ausreicht. Für den 122, 8kHz Schwingkreis wird durch die Serienschaltung der Hilfsinduktivität L und der Antenne A die vorhandene Energie ebenfalls halbiert.

Wie aus Figur 1 ersichtlich, ist der Dämpfungswiderstand R parallel zur Antenne geschaltet, eine Tatsache, die aus der erforderlichen hohen Güte für den 122kHz Schwingkreis resultiert. Mittels des Dämpfungswiderstandes kann die Gütereduktion der Antenne geregelt und kontrolliert werden. Der Dämpfungswiderstand kann sehr große Werte annehmen, weil die Reaktanz der Antenne bei der hohen Frequenz um zwei Größenordnungen größer ist als die entsprechende Reaktanz bei 122,8 kHz.

Der Resonanzkondensator C2 dient dem Abgleich der 13,56MHz der 13,56MHz-Antenne und stellt aufgrund seiner sehr hohen Reaktanz für den 122, 8kHz Schwingkreis einen Leerlauf dar, so dass seine Funktionsweise nicht beeinflusst wird. Entsprechend dient der Koppelkondensator C1 im Abgleich und der Anpassung der Antennenparallelresonanz für die von dem Leser benötigten Last von 50Ω. Analog zum Resonanzkondensator C2 stellt dieser Kondensator C1 aufgrund der hohen Reaktanz für 122,8kHz ebenfalls einen Leerlauf dar. Erfindungsgemäß dient der Resonanzkondensator für 122,8kHz C3 als Resonanzabgleichmaßnahme, wobei dessen Kapazität für 13, 56MHz einen Kurzschluß darstellt.

Der in Figur 1 gezeigte Hilfsschalter HSW ist erfindungsgemäß für den Schwingkreisbetrieb bei 13,56MHz ständig geschlossen. Dieser Schalter ist äußerst niederohmig ausgebildet, um die für die gewünschte Reichweite bei 122,8kHz benötigte Güte geringstmöglich zu beeinflussen. Während eines uplinks wird der Hilfsschalter zu den Zeitpunkten beginnender Trägerlücken für die Zeitdauer dieser Lücken ausgeschaltet, wobei diese Zeitaugenblicke mit einem Trägersinusspannungsmaximum am Punkt der Einspeisung des 122kHz-Lesers synchron ablaufen. Während der Zeitdauer dieser Lücke ändert sich die Amplitude des Trägers nicht.

Erfindungsgemäß wird die aktuell vorhandene Energie des Schwingkreises in der Resonanzkapazität gespeichert.

Im Gegensatz zu dem Stand der Technik ist der Leistungsverstärker zur Erzeugung der Trägeramplitude für den 122kHz-Schwingkreis hochohmig ausgebildet.

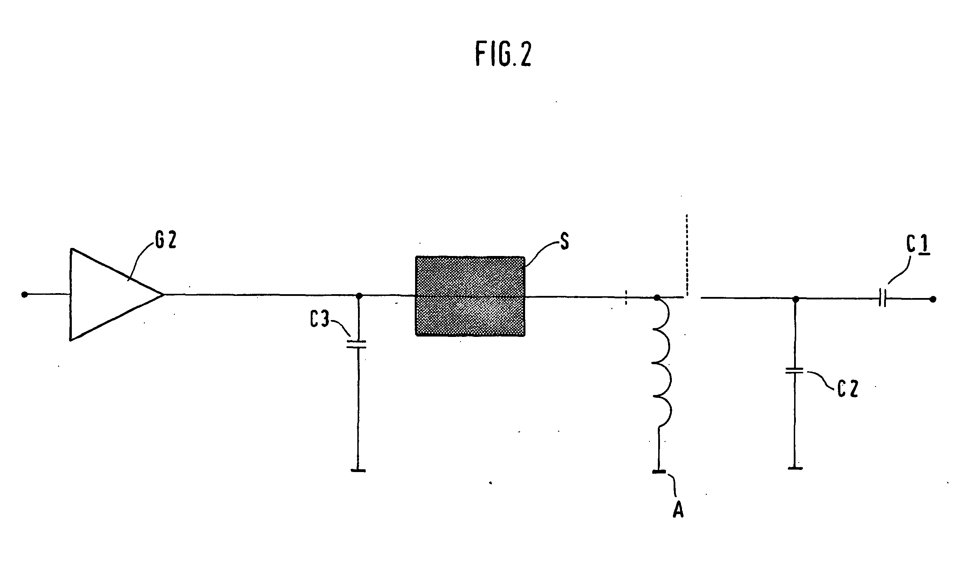

Gemäß Figur 2 wird im Rahmen einer zweiten Ausführungsform die Hilfsinduktivität L durch einen Schalter S ersetzt. Dies hat den Vorteil, dass ein Energieverlust beim Schwingkreis von 13,56MHz der durch die Parallelschaltung mit der Hilfsinduktivität verursacht worden ist, vermieden wird.

Gemäß der Erfindung kann als Schalter S ein elektromechanisches Relais, eine Pin-Diode, ein Feldeffekttransistor (FET), ein Sperrkreis, eine Induktivität oder auch ein Halbleiterrelais verwendet werden.

## Patentansprüche

1. Endgerät zur Kommunikation mit berührungslos arbeitenden Datenträgern, mit einer Sende-/Empfangselektronik mit zwei Schwingkreisen mit Antenne und Kondensator zur Ausstrahlung von zwei radiofrequenten Feldern mit unterschiedlicher Trägerfrequenz, wobei die gemeinsame Antenne (A) für beide Schwingkreise eine Windung aufweist, **dadurch gekennzeichnet, dass** die Antenne (A) als Koaxialkabel mit einem Innenleiterquerschnitt von 1 bis 5 mm ausgebildet ist, wobei der Antennenschirm (ASH) im mittleren Bereich unterbrochen ist.

2. Endgerät nach Anspruch 1, **dadurch gekennzeichnet, dass** die Sende-/ Empfangselektronik eine Hilfsspule L aufweist, die derart angeordnet ist, dass sie für den niederfrequenten Schwingkreis in Serie zur Antenne (A) geschaltet ist, während sie für den hochfrequenten Schwingkreis parallel geschaltet ist.

3. Endgerät nach Anspruch 2 **dadurch gekennzeichnet, dass** die Hilfsspule L durch einen Schalter (S) ersetzt wird.

4. Endgerät nach Anspruch 3, **dadurch gekennzeichnet, dass** der Schalter (S) als elektromechanisches Relais, als Pin-Diode, als Feldeffekttransistor (FET), als Sperrkreis, als Induktivität oder auch als Halbleiterrelais ausgebildet ist.

## Claims

1. A terminal for communication with contactless-type data carriers having transceiving electronics with.two resonant circuits with antenna and capacitor for radiating two radiofrequency fields with different carrier frequency, wherein the common antenna (A) for both resonant circuits has one turn, **characterized in that** the antenna (A) is formed as a coaxial cable with an inner conductor cross section of 1 to 5 millimeters, the antenna shield (ASH) being interrupted in the middle area.

2. A terminal according to claim 1, **characterized in that** the transceiving electronics has an auxiliary coil (L) disposed so as to be connected in series with the antenna (A) for the low-frequency resonant circuit while being connected in parallel for the high-frequency resonant circuit.

3. A terminal according to claim 2, **characterized in that** the auxiliary coil (L) is replaced with a switch (S).

4. A terminal according to claim 3, **characterized in that** the switch (S) is formed as an electromechanical relay, a pin diode, a field-effect transistor (FET), a wave trap, an inductance or a semiconductor relay.

## Revendications

1. Terminal de communication avec des supports de données travaillant sans contact, comportant un système électronique d'émission/de réception avec deux circuits oscillants avec antenne et condensateur pour émettre deux champs de radiofréquence avec une fréquence porteuse différente, l'antenne commune (A) pour les deux circuits oscillants présentant une spire, **caractérisé en ce que** l'antenne (A) est réalisée sous forme de câble coaxial avec une section transversale de conducteur intérieur de 1 à 5 mm, le blindage d'antenne (ASH) étant interrompu dans la zone médiane.

2. Terminal selon la revendication 1, **caractérisé en ce que** le système électronique d'émission/de réception présente une bobine auxiliaire L qui est agencée de telle sorte qu'elle est montée en série par rapport à l'antenne (A) pour le circuit oscillant à basse fréquence tandis qu'elle est montée en parallèle pour le circuit oscillant à haute fréquence.

3. Terminal selon la revendication 2, **caractérisé en ce que** la bobine auxiliaire L est remplacée par un commutateur (S).

4. Terminal selon la revendication 3, **caractérisé en ce que** le commutateur (S) est réalisé sous forme de relais électromécanique, de diode PIN, de transistor à effet de champ (FET), de circuit de suppression, de bobine d'inductance ou aussi de relais semi-conducteur.
